# EUROPÄISCHE PATENTANMELDUNG

(11) **EP 3 599 391 A1**
(43) Veröffentlichungstag der Anmeldung: **29.01.2020**
(21) Anmeldenummer: 18184998.5
(22) Anmeldetag: 23.07.2018
(51) Int. Cl.: F16H 1/28, F16H 1/46, F16H 37/04, F03D 15/00

(54) **KOPPELGETRIEBE FÜR WINDKRAFTANLAGEN UND INDUSTRIE-APPLIKATIONEN**

(71) Anmelder: Flender GmbH, 46395 Bocholt (DE)
(72) Erfinder: Papies, Jennifer, 44797 Bochum (DE); Jorke, Silvia, 46117 Oberhausen (DE)
(74) Vertreter: Maier, Daniel Oliver

(57) **Zusammenfassung**

Die Erfindung betrifft ein Koppelgetriebe (10), das eine erste, eine zweite und eine dritte Planetenstufe (20, 30, 40) umfasst. In jeder der Planetenstufen (20, 30, 40) sind als Stufenkomponenten (11) ein Hohlrad (12), einen Planetenträger (14) und ein Sonnenrad (16) angeordnet. Erfindungsgemäß ist nur eine Stufenkomponente (11) stationär ausgebildet ist. Die Erfindung betrifft auch eine Windkraftanlage (70), die über einen Antriebsstrang (60) verfügt, in der ein entsprechendes Koppelgetriebe (10) eingesetzt wird. Ferner betrifft die Erfindung eine Industrie-Applikation (80), in der ein entsprechendes Koppelgetriebe (10) verwendet wird.

## Beschreibung

Die Erfindung betrifft ein Koppelgetriebe, das für den Einsatz in einer Windkraftanlage oder einer Industrie-Applikation ausgebildet ist. Die Erfindung betrifft auch einen Antriebsstrang einer Windkraftanlage, der über ein entsprechendes Koppelgetriebe verfügt. Gleichermaßen betrifft die Erfindung eine Windkraftanlage, die mit einem derartigen Antriebsstrang ausgestattet ist. Ferner betrifft die Erfindung eine Industrie-Applikation, die als Getriebe über ein entsprechendes Koppelgetriebe verfügt.

Aus DE 199 63 597 A1 ist ein Getriebe für Windkraftanlagen bekannt, das über insgesamt drei Planetenstufen verfügt. Eine in eine erste Stufe eingeleitete Antriebsleistung wird verzweigt in eine zweite und dritte Stufe ausgeleitet. Dazu ist in der ersten Stufe das Hohlrad stationär ausgebildet und in der zweiten Stufe der Planetenträger.

Die Druckschrift DE 10 2013 216 802 A1 offenbart ein dreistufiges Getriebe, bei dem ein Antriebsdrehmoment über eine Sonnenwelle in eine erste Planetenstufe eingeleitet wird und über deren Planetenträger und deren Hohlrad an die zweite und dritte Planetenstufe weitergeleitet wird. Die so aufgeteilte Antriebsleistung wird über ein Hohlrad der dritten Planetenstufe an eine Abtriebswelle weitergeführt. Dabei ist der Planetenträger der zweiten Planetenstufe stationär ausgebildet.

DE 10 2012 217 509 A1 offenbart ein dreistufiges Getriebe, in dem ein Planetenträger einer ersten Planetenstufe und ein Hohlrad einer zweiten Planetenstufe mit einer Antriebswelle verbunden sind. Das Hohlrad der ersten Planetenstufe ist drehfest mit der Sonnenwelle der zweiten Planetenstufe gekoppelt, die wiederum mit einem Hohlrad der dritten Planetenstufe verbunden ist. Des Weiteren ist die Sonnenwelle der ersten Planetenstufe mit einem Planetenträger der der dritten Planetenstufe verbunden.

In einer Vielzahl an Teilgebieten des Anlagenbaus und in der Energieerzeugung besteht die Zielsetzung, höhere Antriebsleistungen einzusetzen, um dadurch größere und leistungsfähigere Anlagen bzw. Kraftwerke zu verwirklichen. Daraus ergibt sich ein Bedarf an Getrieben, die bei erhöhter Eingangsleistung ein erhöhtes Übersetzungs- bzw. Untersetzungsverhältnis bieten. Gleichzeitig wird eine kompakte und kosteneffiziente Bauweise gewünscht. Beispielsweise wird bei Windkraftanlagen angestrebt, bei gleichbleibender Gondelgröße höhere Antriebsleistungen in ein Getriebe einzuleiten. Ebenso wird ein hohes Maß an Zuverlässigkeit und Lebensdauer für das Getriebe angestrebt. Der Erfindung liegt die Aufgabe zugrunde, ein Getriebe bereitzustellen, das in zumindest einem dieser Punkte eine Verbesserung bietet.

Die Aufgabenstellung wird durch das erfindungsgemäße Koppelgetriebe gelöst. Das Koppelgetriebe umfasst eine erste, zweite und dritte Planetenstufe, die miteinander verbunden sind. Die Planetenstufen weisen jeweils eine Mehrzahl an Getriebekomponenten auf, die zur Übertragung einer eingeleiteten Antriebsleistung unter Wandlung der vorliegenden Drehzahl ausgebildet sind. Die Getriebekomponenten umfassen je Planetenstufe ein Hohlrad, ein Sonnenrad, und einen Planetenträger, der eine Mehrzahl an Planetenradachsen aufweist, die dazu ausgebildet sind, darauf Planetenräder drehbar anzuordnen. Entsprechend weist das Koppelgetriebe ein erstes, zweites und drittes Hohlrad, einen ersten zweiten und dritten Planetenträger und ein erstes, zweites und drittes Sonnenrad auf. Erfindungsgemäß ist die erste oder die zweite Planetenstufe als ein Plusgetriebe ausgebildet. Bei einem Plusgetriebe ist beispielsweise ein Sonnenrad über zwei miteinander kämmende Zahnräder, die als Planetenräder dienen, mit dem zugehörigen Hohlrad gekoppelt. Dies bedeutet, gegenüber einem korrespondierenden Minusgetriebe, dass die Drehrichtung einer Abtriebswelle umgekehrt ist. Das Plusgetriebe kann beim erfindungsgemäßen Koppelgetriebe auch durch jegliche andere bekannte Bauform eines Plusgetriebes verwirklicht werden. Darüber hinaus ist korrespondierend die verbleibende erste bzw. zweite Planetenstufe als Minusgetriebe ausgebildet.

Dadurch, dass die erste oder zweite Planetenstufe als Plusgetriebe ausgebildet ist, weisen Teilleistungen, die der dritten Planetenstufe zugeführt werden, entgegengesetzten Drehrichtungen auf. Dies erlaubt es, an der dritten Planetenstufe ein erhöhtes Standübersetzungsverhältnis zu erzielen. Dies resultiert in einem erhöhten Gesamtübersetzungsverhältnis zwischen einer ersten und einer zweiten Leistungswelle, über die, je nach Anwendungsfall, eine Antriebsleistung oder Abtriebsleistung zugeführt bzw. abgeführt wird. Zusätzlich oder alternativ kann auch bei gleichbleibendem Gesamtübersetzungsverhältnis das erfindungsgemäße Koppelgetriebe besonders kompakt konstruiert werden.

In einer Ausführungsform des beanspruchten Koppelgetriebes ist der Planetenträger der zweiten Planetenstufe stationär ausgebildet und damit gegenüber einer Hauptdrehachse des Koppelgetriebes starr. Dazu ist der Planetenträger der zweiten Planetenstufe beispielsweise starr mit einem Gehäuse des Koppelgetriebes, mit einem Maschinenrahmen, oder einer Halterung in der Umgebung des Koppelgetriebes verbunden. Eine als Plusgetriebe ausgebildete Planetenstufe weist in ihrem Planetenträger eine erhöhte Anzahl an Planetenrädern auf, beispielsweise doppelt so viele Planetenräder wie eine korrespondierende Planetenstufe, die als Plusgetriebe ausgebildet ist. Bei einem Koppelgetriebe, bei dem die zweite Planetenstufe als Plusgetriebe ausgebildet ist und deren Planetenträger stationär ausgebildet ist, werden die rotierenden Massen gering gehalten. Dies führt zu einer Reduzierung der Belastung von Lagern drehender Getriebekomponenten. Infolgedessen wird auch eine erhöhte Geräuschentwicklung durch eine erhöhte Anzahl an rotierenden Planetenrädern in der zweiten Planetenstufe vermieden. Hierdurch wird im Getriebe das Auftreten von mechanischer Blindleistung minimiert.

In einer weiteren Ausführungsform des beschriebenen Koppelgetriebes ist das Hohlrad der ersten und/oder der zweiten Planetenstufe stationär ausgebildet. Unter stationär ist zu verstehen, dass das bzw. die entsprechenden Hohlräder im Betrieb des Koppelgetriebes gegenüber der Hauptdrehachse starr ist. Das oder die Hohlräder können dadurch stationär ausgebildet sein, dass die mit des Gehäuse des Koppelgetriebes, einem Maschinenrahmen oder einer Halterung in der Umgebung des Koppelgetriebes verbunden sind. Hohlräder weisen eine erhöhte Masse und einen erhöhten Außendurchmesser auf, so dass durch die beschriebene Lösung die rotierenden Massen des Koppelgetriebes gering gehalten werden. Dies führt zu einer Reduzierung der Belastung von Lagern von drehenden Getriebekomponenten im Koppelgetriebe. Durch ein oder mehrere stationäre Hohlräder wird ebenfalls die Laufruhe des beanspruchten Koppelgetriebes erhöht. Inwieweit die Laufruhe durch ein oder mehrere stationäre Hohlräder, oder durch einen stationären Planetenträger der zweiten Planetenstufe steigerbar ist, ist von der Größe des Koppelgetriebes abhängig. Das beanspruchte Koppelgetriebe ist folglich unter Beibehaltung seiner technischen Vorteile an unterschiedliche Anwendungsfälle mit unterschiedlichen Antriebsleistungen anpassbar. Das beanspruchte Koppelgetriebe ist somit vielseitig einsetzbar. Darüber hinaus erlaubt die so erzielte Reduzierung in der Beanspruchung von Lagern von drehenden Getriebekomponenten, diese entweder kleiner zu dimensionieren oder durch die reduzierte Beanspruchung für die Lager eine erhöhte Lebensdauer zu erzielen.

Darüber hinaus können beim beanspruchten Koppelgetriebe die Planetenradachsen von zwei ineinandergreifenden Planetenrädern in der als Plusgetriebe ausgebildeten Planetenstufe zusammen mit der Hauptdrehachse des Koppelgetriebes in Dreiecksanordnung angeordnet sein. Die Dreiecksanordnung ist dabei auf eine Betrachtung des Plusgetriebes im Querschnitt bezogen. Dabei liegen die Planetenradachsen von zwei miteinander kämmenden Planetenrädern in der als Plusgetriebe ausgebildeten Planetenstufe und die Hauptdrehachse nicht auf einer Geraden. Eine derartige Dreiecksanordnung erlaubt eine in Radialrichtung kompakte Konstruktion der als Plusgetriebe ausgebildeten Planetenstufe. Ferner werden so Belastungsrichtungen, und damit Lagerbeanspruchungen an den entsprechenden Planetenradachsen beeinflusst. Mittels der Dreieckanordnung der Planetenradachsen und der Hauptdrehachse sind die Planetenradachsen von ineinandergreifenden Planetenrädern belastungsgerecht konstruierbar, was wiederum eine Gewichtsersparnis bietet. Ebenso werden die Lager an den Planetenradachsen entlastet, was wiederum den Einsatz einfacherer und kosteneffizienterer Lager ermöglicht.

Ferner kann im beanspruchten Koppelgetriebe der Planetenträger der ersten Planetenstufe starr mit dem Planetenträger der zweiten Planetenstufe verbunden sein. Insbesondere kann eine solche starre Kopplung der Planetenträger dadurch verwirklicht werden, dass jeweils ein Planetenrad im Planetenträger der ersten und zweiten Planetenstufe auf koaxialen Planetenradachsen angeordnet sind. Beispielsweise kann eine Planetenradachse in der ersten Stufe koaxial zu einer Planetenradachse eines inneren Planetenrads der zweiten Planetenstufe angeordnet sein. Das innere Planetenrad wirkt dabei in der zweiten Planetenstufe mit einem äußeren Planetenrad zusammen, das wiederum mit dem zugehörigen Hohlrad kämmt. Darüber hinaus können die koaxialen Planetenradachsen in der ersten und zweiten Planetenstufe einstückig ausgebildet sein und eine durchgehende gemeinsame Planetenradachse bilden. Es wird insgesamt eine starre Kopplung zwischen den Planetenträgern der ersten und zweiten Stufe erzielt, was wiederum eine Bauraumersparnis ermöglicht. Die Planetenräder der ersten Stufe umlaufen dadurch nicht die Hauptdrehachse des Koppelgetriebes, wodurch die rotierenden Massen im beanspruchten Koppelgetriebe weiter reduziert werden. Der Vorteil der Geräuschminderung im Betrieb wird hierdurch weiter gesteigert. Ferner ermöglichen starr miteinander verbundene Planetenträger den Einsatz von durchgehenden Planetenträgerstegen über die erste und zweite Planetenstufe hinweg. Dies erlaubt wiederum eine Reduzierung der Bauteilanzahl.

Des Weiteren können die Hohlräder der ersten und zweiten Planetenstufe im beanspruchten Koppelgetriebe durchgängig ausgebildet sein. Bei durchgängig ausgebildeten Hohlrädern weisen diese eine gemeinsame, also gleiche, Verzahnung auf. Dadurch können die Hohlräder der ersten und zweiten Planetenstufe einstückig ausgebildet sein, wodurch die vorhandene Anzahl an Bauteilen im Koppelgetriebe reduziert wird. Insbesondere können die Hohlräder dadurch in einem Stück gestoßen werden, was deren Fertigung wiederum vereinfacht.

Im beanspruchten Koppelgetriebe kann ferner das Sonnenrad der ersten Planetenstufe mit dem Hohlrad der dritten Planetenstufe drehstarr verbunden sein. Zusätzlich oder alternativ kann das Sonnenrad der zweiten Planetenstufe mit dem Planetenträger der dritten Planetenstufe verbunden drehstarr sein. Infolgedessen wird an der dritten Planetenstufe zwischen dessen Hohlrad und dessen Planetenträger eine gegenläufige Drehung hervorgerufen. Eine gegenläufige Drehung von Hohlrad und Planetenträger führt betragsmäßig zu einer erhöhten Drehzahl des Sonnenrads der dritten Planetenstufe. Insbesondere ist, bei betragsmäßig gleichen Drehzahlen am Hohlrad und am Planetenträger, bei einer entsprechenden gegenläufigen Drehung die Drehzahl am Sonnenrad höher als bei gleichsinniger Drehrichtung von Hohlrad und Planetenträger. Dadurch wird ein erhöhtes Standübersetzungsverhältnis an der dritten Planetenstufe erzielt und das Gesamtübersetzungsverhältnis von der ersten zur zweiten Leistungswelle des Koppelgetriebes gesteigert. Dies erlaubt ein stärkere Ausnutzung der eingesetzten Getriebekomponenten oder eine kleinere Dimensionierung dieser Getriebekomponenten, was wiederum eine kompaktere Bauweise des Koppelgetriebes ermöglicht.

Darüber hinaus kann die erste Leistungswelle des Koppelgetriebes als mit den Planetenträgern der ersten und zweiten Planetenstufe drehstarr verbunden sein. Unter der ersten Leistungswelle ist eine Welle zu verstehen, an der die vorliegende Drehzahl niedriger ist als an einer zweiten Leistungswelle. Bei Verwendung des Koppelgetriebes zur Steigerung der Drehzahl wird dem Koppelgetriebe über die erste Leistungswelle eine Antriebsleistung zugeführt und über die zweite Leistungswelle eine Abtriebsleistung mit gesteigerter Drehzahl abgeführt. Dies erfolgt beispielweise bei einem Einsatz des Koppelgetriebes in einer Windkraftanlage. Korrespondierend wird über die zweite Leistungswelle eine Antriebsleistung zugeführt und über die erste Leistungswelle mit reduzierter Drehzahl abgeführt, wenn das Koppelgetriebe zu einer Drehzahlreduzierung eingesetzt wird. Dies ist beispielsweise der Fall, wenn das Koppelgetriebe in einer Industrie-Applikation zum Antreiben einer mechanischen Anwendung benutzt wird. Durch die Verbindung der ersten Leistungswelle mit den Planetenträgern der ersten und zweiten Planetenstufe erfolgt beispielsweise eine Aufteilung einer über die erste Leistungswelle zugeführte Antriebsleistung. Alternativ kann die erste Leistungswelle auch mit den Hohlrädern der ersten und zweiten Planetenstufe drehstarr verbunden sein. Auch hierdurch wird eine Aufteilung, beispielsweise einer über die erste Leistungswelle zugeführten Antriebsleistung, erzielt. Dabei kann das Koppelgetriebe derart ausgebildet sein, dass der ersten Planetenstufe bis zu 70% der Antriebsleistung zugeführt werden, und korrespondierend der zweiten Planetenstufe 30% der Antriebsleistung. Vorzugsweise wird der ersten Planetenstufe 60% der Antriebsleistung und der zweiten Planetenstufe 40% der Antriebsleistung zugeführt. Besonders bevorzugt werden der ersten und zweiten Planetenstufe jeweils 50% der Antriebsleistung zugeführt. Daraus resultiert eine Entlastung der ersten Planetenstufe, was wiederum eine kompaktere Konstruktion ermöglicht. Ferner wird dadurch das Konzept des Koppelgetriebes verwirklicht.

Ferner kann das Sonnenrad der dritten Planetenstufe mit der zweiten Leistungswelle des Koppelgetriebes verbunden sein. Hierdurch wird, wenn die Antriebsleistung über die erste Leistungswelle zugeführt wird, die Abtriebsleistung des Koppelgetriebes über das Sonnenrad der dritten Planetenstufe auf der zweiten Leistungswelle zusammengeführt. Die Abtriebsleistung entspricht im Wesentlichen, unter Berücksichtigung mechanischer Verluste, der Antriebsleistung. Das beanspruchte Koppelgetriebe erlaubt es so, eine gesteigerte Antriebsleistung als von der ersten Leistungswelle in einer erhöhte Drehzahl an der zweiten Leistungswelle umzusetzen. Dies erlaubt es, bei reduzierter Baugröße des Koppelgetriebes zumindest gleichbleibende Antriebsleistungen umzusetzen.

Des Weiteren kann im beanspruchten Koppelgetriebe die erste und/oder zweite Planetenstufe betragsmäßig ein niedrigeres Standübersetzungsverhältnis aufweisen als die dritte Planetenstufe. Dadurch wird ein vorteilhaftes Größenverhältnis für die drei Planetenstufen in puncto Außendurchmesser erzielt, was wiederum eine platzsparende Konstruktion für das Koppelgetriebe ermöglicht.

Im beanspruchten Koppelgetriebe kann die zweite Planetenstufe unter den vorhandenen drei Planetenstufen den größten Außendurchmesser aufweisen. Der Außendurchmesser ist dabei auf das Hohlrad der entsprechenden Planetenstufe bezogen. Infolgedessen bietet der Bereich des Hohlrads der zweiten Planetenstufe, sowohl bei gehäusefreien Koppelgetrieben als auch Koppelgetrieben mit Gehäuse, entsprechend Platz um dort zumindest eine Drehmomentstütze anzubringen. Aufgrund des erhöhten Außendurchmessers an der zweiten Planetenstufe sind dadurch Übergänge zwischen der Drehmomentstütze und der zweiten Planetenstufe möglich.

Darüber hinaus kann das Koppelgetriebe mit einer Stirnradstufe ausgestattet sein. Die Stirnradstufe ist dabei an der ersten und/oder zweiten Leistungswelle angebracht. Dies erlaubt eine einfache Weiterbildung des Koppelgetriebes wenn, je nach Einsatzzweck, eine weitere Steigerung des Gesamtübersetzungsverhältnisses erforderlich ist.

Die beschriebene Aufgabenstellung wird auch durch einen erfindungsgemäßen Antriebsstrang gelöst. Der Antriebsstrang ist zur Verwendung in einer Windkraftanlage ausgebildet und umfasst eine Rotorwelle, die mit einem Rotor der Windkraftanlage verbindbar ist. Der Antriebsstrang umfasst auch ein Getriebe, das drehmomentübertragend mit der Rotorwelle verbunden ist. Ferner weist der Antriebsstrang einen Generator auf, der auch drehmomentübertragend mit dem Getriebe verbunden ist. Erfindungsgemäß ist das Getriebe als ein Koppelgetriebe nach einer der oben beschriebenen Ausführungsformen ausgebildet. Ein entsprechender Antriebsstrang weist gegenüber den aus dem Stand der Technik bekannten Lösungen bei gleichbleibenden Abmessungen eine erhöhte Leistungsfähigkeit auf, ist also dazu ausgebildet höhere Antriebsleistungen vom Rotor der Windkraftanlage zum Generator zu transportieren. Alternativ weist ein erfindungsgemäßer Antriebsstrang bei gleichbleibender Antriebsleistung reduzierte Abmessungen gegenüber den bekannten Lösungen, insbesondere einen reduzierten Außendurchmesser am Getriebe auf.

Gleichermaßen wird die skizzierte Aufgabenstellung durch eine erfindungsgemäße Windkraftanlage gelöst. Die Windkraftanlage weist einen Rotor auf, der an einer Gondel angebracht ist. Der Rotor ist drehmomentübertragend mit der Rotorwelle verbunden, die wiederum einem Antriebsstrang der Windkraftanlage zugeordnet ist. Eine Drehung des Rotors wird so über die Rotorwelle in den Antriebsstrang übertragen. Die beanspruchte Windkraftanlage ist mit einem Antriebsstrang gemäß den oben beschriebenen Aspekt der Erfindung ausgebildet, verfügt also über ein Getriebe, das als Koppelgetriebe nach einer der skizzierten Ausführungsformen ausgebildet ist. Die erfindungsgemäße Windkraftanlage ist dadurch entweder bei gleichbleibenden Abmessungen des Antriebsstrangs, insbesondere seines Getriebes, leistungsfähiger und dazu geeignet, höhere Wellenleistungen vom Rotor in Elektrizität umzuwandeln. Alternativ oder ergänzend ist die erfindungsgemäße Windkraftanlage bei gleichbleibender Leistung in ihren Komponenten, insbesondere beim Antriebsstrang und der Gondel, kleiner als die aus dem Stand der Technik bekannten Lösungen. Infolgedessen ist die erfindungsgemäße Windkraftanlage wirtschaftlicher in der Herstellung und/oder im Betrieb.

Die zugrundeliegende Aufgabenstellung wird auch durch eine erfindungsgemäße Industrie-Applikation gelöst. Die Industrie-Applikation umfasst ein Antriebsmittel, das beispielsweise als Elektromotor, also Verbrennungsmotor oder als Hydraulikmotor ausgebildet sein kann. Das Antriebsmittel ist drehmomentübertragend mit einem Getriebe gekoppelt, durch das eine Drehzahl und ein Drehmoment einer zugeführten Antriebsleistung veränderbar ist. Das Getriebe wiederum ist drehmomentübertragend mit einer mechanischen Anwendung gekoppelt, die beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein kann. Erfindungsgemäß ist in der Industrie-Applikation das Getriebe als ein Koppelgetriebe gemäß einer der oben beschriebenen Ausführungsformen ausgebildet. Die erfindungsgemäße Industrie-Applikation kann damit bei gleichbleibender Größe leistungsfähiger ausgelegt werden oder kann bei gleichbleibender Leistung kompakter gebaut werden.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine schematische Darstellung einer ersten Ausführungsform des beanspruchten Koppelgetriebes;
- FIG 2: eine schematische Darstellung einer zweiten Ausführungsform des beanspruchten Koppelgetriebes;
- FIG 3: eine schematische Darstellung einer dritten Ausführungsform des beanspruchten Koppelgetriebes;
- FIG 4: eine schematische Darstellung einer vierten Ausführungsform des beanspruchten Koppelgetriebes;
- FIG 5: eine schematische Darstellung einer fünften Ausführungsform des beanspruchten Koppelgetriebes;
- FIG 6: eine schematische Darstellung einer Ausführungsform einer Planetenstufe im Querschnitt;
- FIG 7: eine geschnittene Schrägansicht einer Ausführungsform einer beanspruchten Windkraftanlage mit einem beanspruchten Antriebsstrang;
- FIG 8: einen schematischen Aufbau einer beanspruchten Industrie-Applikation.

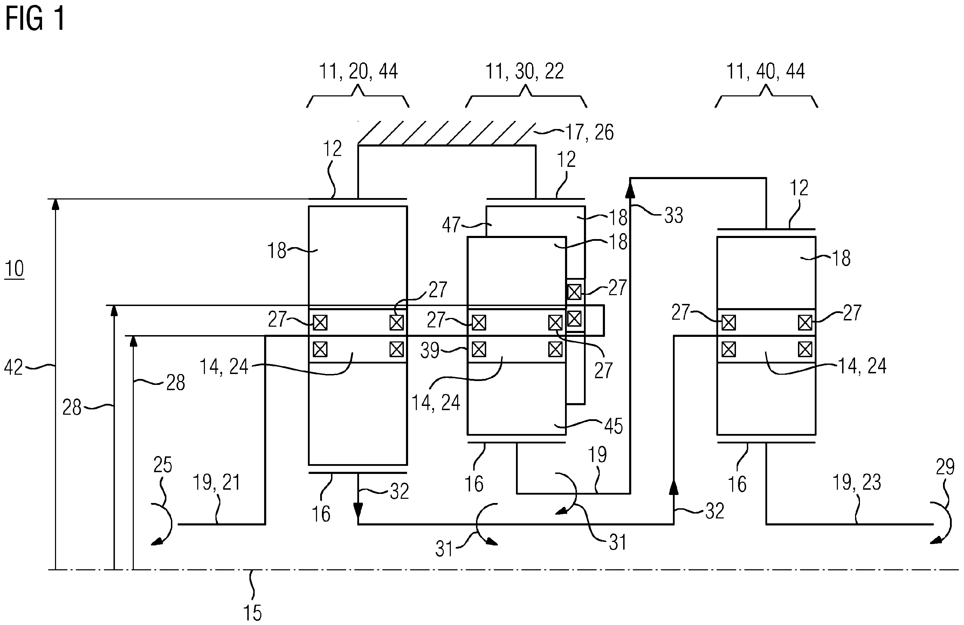

FIG 1 zeigt schematisch den Aufbau einer ersten Ausführungsform des beanspruchten Koppelgetriebes 10, das eine erste, zweite und dritte Planetenstufe 20, 30, 40 aufweist. Die Planetenstufen 20, 30, 40 weisen jeweils als Stufenkomponenten 11 ein Hohlrad 12, einen Planententräger 14 mit darin aufgenommenen Planetenrädern 18 und ein Sonnenrad 16 auf. In jeder der drei Planetenstufen 20, 30, 40 greifen die Stufenkomponenten 11 ineinander und verwirklichen in jeder der Planetenstufen 20, 30, 40 ein einstufiges Planetengetriebe, das sich im Betrieb um eine Hauptdrehachse 15 dreht. An den Planetenträgern 14 der Planetenstufen 20, 30, 40 sind dazu Planetenradachsen 24 angeordnet, die mit Lagern 27 versehen sind. Dadurch wird eine drehbare Aufnahme der Planetenräder 18 in den jeweiligen Planetenträgern 14 verwirklicht. In der zweiten Planetenstufe 30 sind im Planetenträger 14 zumindest zwei Planetenräder 18 aufgenommen, die an unterschiedlichen Radialpositionen 28 angebracht sind. Eine radial äußere Richtung ist in FIG 1 durch den Pfeil 28 dargestellt. Damit sind im Planetenträger 14 der zweiten Planetenstufe 30 zumindest ein radial inneres Planetenrad 45 und ein radial äußeres Planetenrad 47 drehbar aufgenommen. Das radial innere Planetenrad 45 kämmt mit dem Sonnenrad 16 der zweiten Planetenstufe 30 und dem radial äußeren Planetenrad 47. Das radial äußere Planetenrad 47 wiederum kämmt mit dem Hohlrad 12 der zweiten Planetenstufe 30. Infolgedessen ist die zweite Planetenstufe 30 als Plusgetriebe 22 ausgebildet. Die erste und dritte Planetenstufe 20, 40 sind als Minusgetriebe 44 ausgebildet.

In der Ausführungsform des beanspruchten Koppelgetriebes 10 wird über eine erste Leistungswelle 21, die als Sonnenwellen 19 ausgebildet ist, eine Antriebsleistung 25 zugeführt. Die Sonnenwelle 19 ist mit dem Planetenträger 14 der ersten Planetenstufe 20 verbunden. Die Planetenradachsen 24 der ersten und zweiten Planetenstufe 20, 30 sind über ein Kopplungselement 39 miteinander verbunden, das einstückig mit den Planetenradachsen 24 der ersten und zweiten Planetenstufe 20, 30 ausgebildet ist. Dadurch bilden die erste und zweite Planetenstufe 20, 30 eine gemeinsame durchgehende Planetenradachse 24. Die Hohlräder 12 der ersten und zweiten Planetenradstufe 20, 30 sind ferner mit einer stationären Anbindung 26 gekoppelt, so dass die Hohlräder 12 der ersten und zweiten Planetenstufe 20, 30 mit einem Gehäuse 17 des Koppelgetriebes 10 verbunden sind. Durch die stationäre Anbindung 26 werden im Koppelgetriebe 10 die rotierenden Massen reduziert und so die Laufruhe des Koppelgetriebes 10 verbessert. Die Antriebsleistung 25, die der ersten und zweiten Planetenstufe 20, 30 über deren Planetenträger 14 bzw. deren Planetenradachsen 24 zugeführt wird, wird im Betrieb jeweils in eine Drehung der Sonnenräder 16 der ersten und zweiten Planetenstufe 20, 30 und deren jeweils zugehörige Sonnenwellen 19 umgesetzt. Dadurch, dass die erste Planetenstufe 20 als Minusgetriebe und die zweite Planetenstufe 30 als Plusgetriebe 22 ausgebildet ist und die erste Planetenstufe als Minusgetriebe 44, sind die Drehrichtungen 31 der Sonnenräder 19, und damit auch der korrespondierenden Sonnenwellen 19, entgegengesetzt. Dies ist in FIG 1 durch die gegensinnig orientierten Pfeile 31 dargestellt. Durch die ersten und zweite Planetenstufe 20, 30 erfolgt eine Aufteilung der Antriebsleistung 25 in einer erste und eine zweite Teilleistung 32, 33. Die erste und zweite Teilleistung 32, 33 sind im Wesentlichen gleich groß und werden über die dritte Planetenstufe 40 wieder zusammengeführt.

Die Sonnenwelle 19 der ersten Planetenstufe 20 ist mit dem Planetenträger 14 der dritten Planetenstufe 40 verbunden und die Sonnenwelle 19 der zweiten Planetenstufe 30 mit dem Hohlrad 12 der dritten Planetenstufe 40. Dadurch, dass das Hohlrad 12 und der Planetenträger 14 der dritten Planetenstufe 40 entgegengesetzte Drehrichtungen 31 aufweisen, wird eine erhöhte Drehzahl am Sonnenrad 16 der dritten Planetenstufe 40 erzielt. Das Sonnenrad 16 der dritten Planetenstufe 40 ist mit einer Sonnenwelle 19 der dritten Planetenstufe 40 verbunden, die als zweite Leistungswelle 23 dient. Über die zweite Leistungswelle 23 wird in FIG 1 eine Abtriebsleistung 29 abgeführt, die unter Berücksichtigung mechanischer Verluste, im Wesentlichen der Antriebsleistung 25 entspricht, die dem Koppelgetriebe 10 zugeführt wird. Das Koppelgetriebe 10 nach FIG 1 weist insgesamt ein erhöhtes Gesamtübersetzungsverhältnis auf und erlaubt eine kompakte Bauweise. Der Außendurchmesser 42 des Koppelgetriebes, der auf das größte Hohlrad 12, also das Hohlrad 12 der ersten Planetenstufe 20, bezogen ist, ist geringer als bei aus dem Stand der Technik bekannten Getrieben, die dazu ausgebildet sind, gleich große Antriebsleistungen 25 aufzunehmen. Die Ausführungsform gemäß FIG 1 bietet ferner eine besonders einfache Wellenanbindung und Wellendurchführung

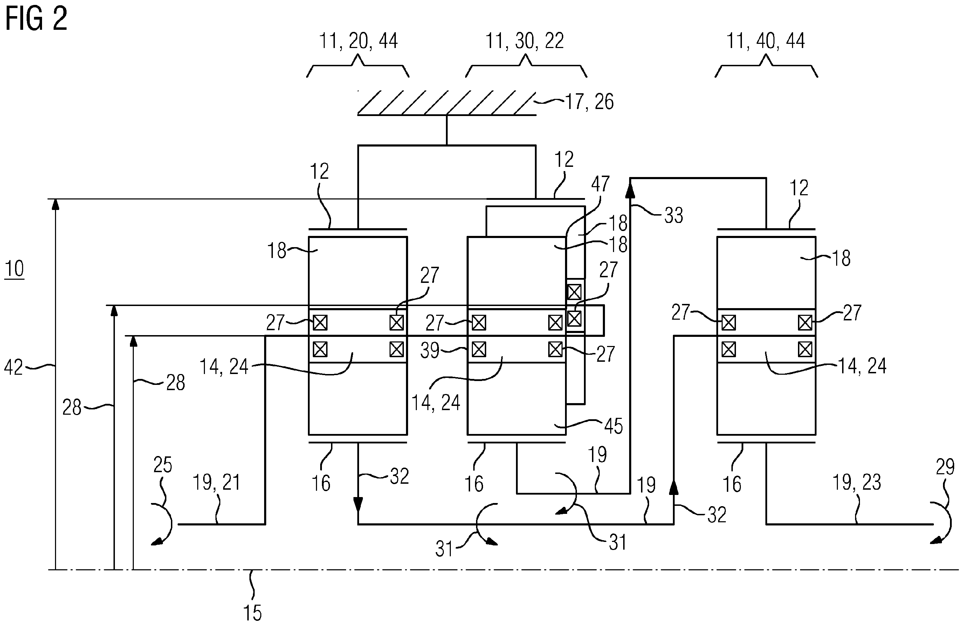

In FIG 2 ist schematisch der Aufbau einer zweiten Ausführungsform des beanspruchten Koppeltriebes 10 dargestellt. Der Aufbau und die Funktionsweise in FIG 2 korrespondiert im Wesentlichen mit FIG 1, so dass die Beschreibung von FIG 1 im Wesentlichen auch für FIG 2 gilt. Insbesondere haben gleiche Bezugszeichen in FIG 1 und FIG 2 die gleiche technische Bedeutung. Im Unterschied zum Aufbau in FIG 1, weist das Hohlrad 12 der zweiten Planetenstufe 30 den größten Außendurchmesser 42 auf. Ferner weisen die Hohlräder 12 der ersten und zweiten Planetenstufe 20, 30 den gleichen Außendurchmesser auf. Dadurch wird ein weiter verbessertes Gesamtübersetzungsverhältnis des Koppelgetriebes 10 erzielt. Dadurch, dass das Hohlrad 12 der zweiten Planetenstufe 30 den größten Außendurchmesser 42 aufweist, wird hierdurch eine vorteilhafte Aufhängung des Koppelgetriebes 10 in einem mittigen Bereich ermöglicht. Des Weiteren sind die Planetenräder 18 in FIG 2 baugleich, also gegeneinander austauschbar, ausgebildet. Dies verwirklicht eine Gleichteileverwendung, die eine kosteneffizientere Fertigung erlaubt.

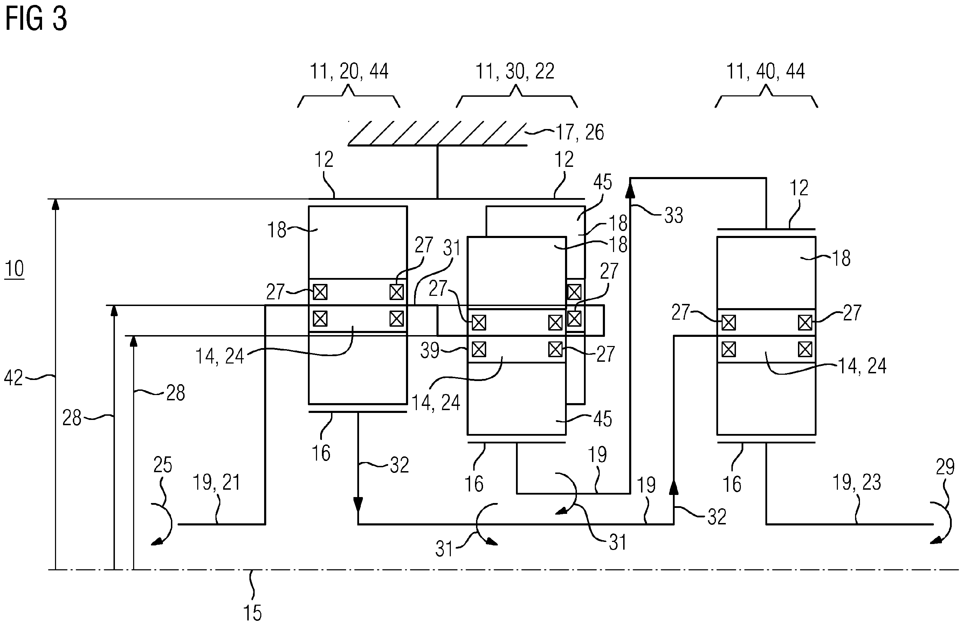

Auch der Aufbau gemäß FIG 3 entspricht im Wesentlichen dem Aufbau nach FIG 1 oder FIG 2. FIG 3 zeigt dabei eine dritte Ausführungsform des beanspruchten Koppelgetriebes 10. Im Unterschied zu FIG 1 und FIG 2 sind die Hohlräder 12 der ersten und zweiten Planetenstufe 20, 30 durchgängig ausgebildet und weisen den gleichen Außendurchmesser 42 auf. Dadurch, dass die Hohlräder 12 der ersten und zweiten Planetenstufe 20, 30 über eine stationäre Anbindung 26 mit dem Gehäuse 17 verbunden sind, werden die rotierenden Massen im Koppelgetriebe 10 reduziert. Schwingungen im Koppeltriebe 10 werden somit verringert, was wiederum im Betrieb die Geräuschentwicklung mindert. Darüber hinaus wird durch die einstückig ausgebildeten Hohlräder 12 in der ersten und zweiten Planetenstufe 20, 30 die Bauteilanzahl verringert, was eine einfachere und schnellere Montage sowie Fertigung erlaubt.

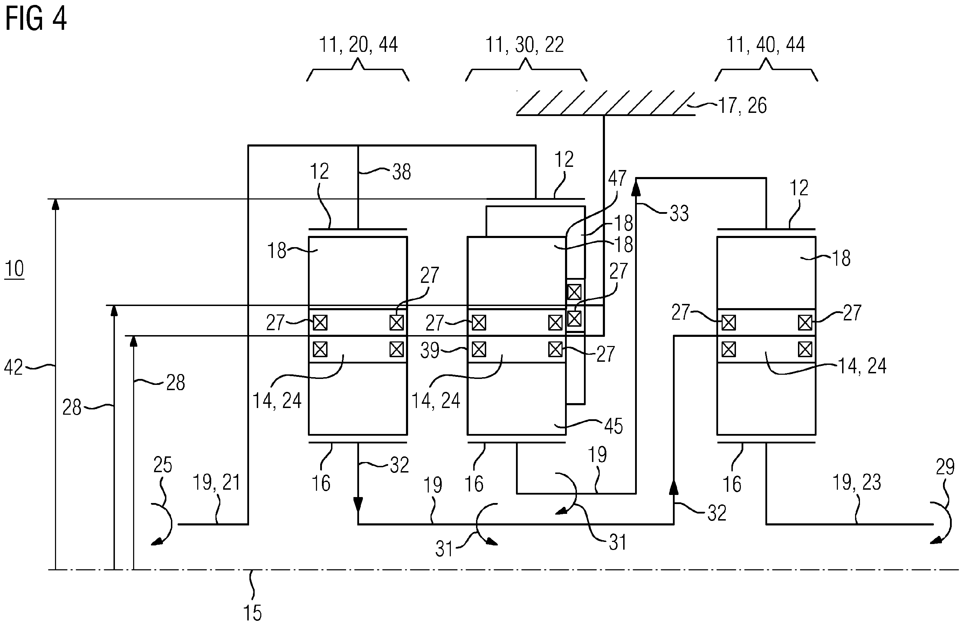

FIG 4 zeigt eine vierte Ausführungsform des beanspruchten Koppelgetriebes 10, bei dem die zweite Planetenstufe 30 stationär ausgebildet ist. Dazu ist die zweite Planetenstufe 30 mit einer stationären Anbindung 26 gekoppelt, die wiederum mit dem Gehäuse 17 des Koppelgetriebes 10 verbunden ist. Durch die gemeinsame durchgehende Planetenradachse 24 der ersten und zweiten Planetenstufe 20, 30 ist auch der Planetenträger 14 der ersten Planetenstufe 20 bezüglich der Hauptdrehachse 15 starr. Die erste Leistungswelle 21, die als Sonnenwelle 19 ausgebildet ist, ist mit den Hohlrädern 12 der ersten und zweiten Planetenstufe 20, 30 verbunden. Die Hohlräder 12 der ersten und zweiten Planetenstufen 20, 30 sind über zumindest ein Verbindungselement 38 drehstarr miteinander verbunden. Das Verbindungselement 38 kann beispielsweise als Stabverbindung oder Flanschverbindung ausgebildet sein. Infolgedessen ist das Koppelgetriebe 10 im Bereich der ersten und zweiten Planetenstufe 20, 30 gehäusefrei ausbildbar, so dass eine Gewichtsersparnis erzielt wird. Wie in der Ausführungsform in FIG 2 sind die Planetenräder auch in FIG 4 baugleich ausgebildet.

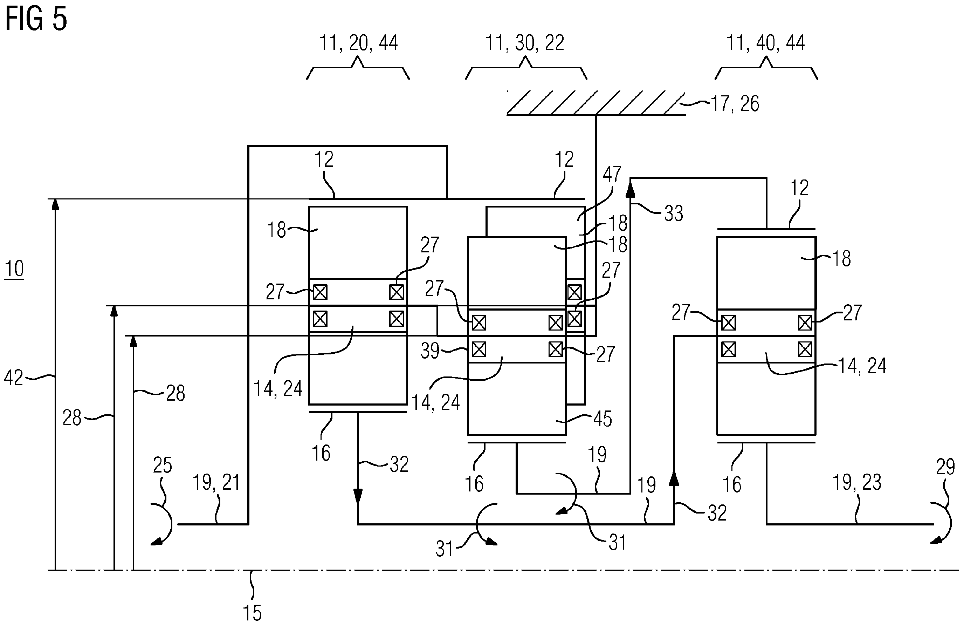

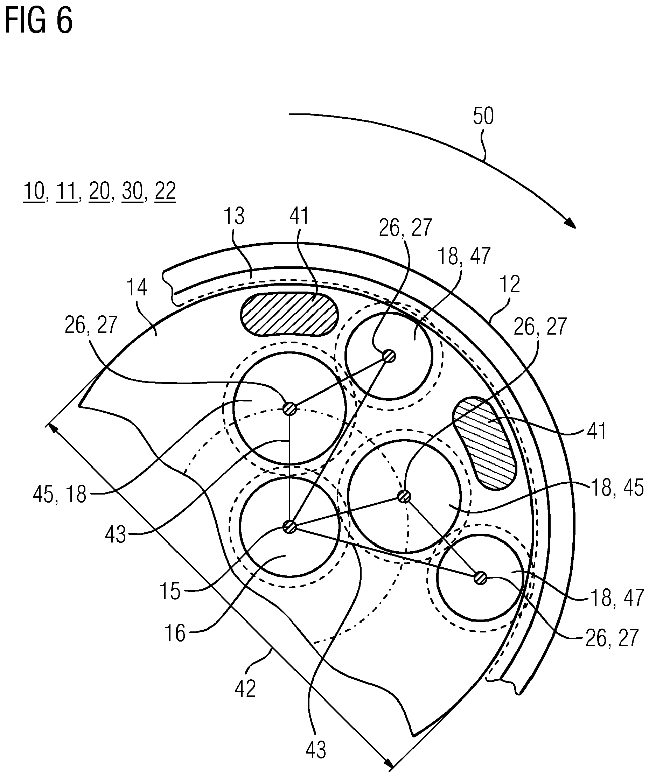

Eine sechste Ausführungsform des beanspruchten Koppelgetriebes 10 ist in FIG 5 abgebildet. Die Ausführungsform in FIG 6 entspricht in Aufbau und Funktionsweise im Wesentlichen den Ausführungsformen aus den FIG 1 bis FIG 5. Gegenüber der Ausführungsform gemäß FIG 4 sind in der sechsten Ausführungsform die Hohlräder 12 der ersten und zweiten Planetenstufe 20, 30 einstückig, also durchgängig, ausgebildet. Dadurch wird die Anzahl an Bauteilen im Koppelgetriebe 10 reduziert, was die Montage einfacher und wirtschaftlicher macht. Die einstückig ausgebildeten Hohlräder 12 erlauben es, das Koppelgetriebe 10 im Bereich der ersten und zweiten Planetenstufe 20, 30 gehäusefrei auszubilden. Dadurch wird eine Gewichtersparnis erzielt. Ferner weisen die einstückig ausgebildeten Hohlräder 12 der ersten und zweiten Planetenstufe 20, 30 den größten Außendurchmesser 42 der drei Planetenstufen 20, 30, 40 auf. Der größte Außendurchmesser 42 ist dabei gegenüber den aus dem Stand der Technik bekannten Getrieben, die für eine gleich große Antriebsleistung konzipiert sind, reduziert. Dadurch ist die Leistungsdichte im beanspruchten Koppeltriebe 10 weiter gesteigert.

Die FIG 6 zeigt im Querschnitt schematisch den Aufbau einer Ausführungsform einer ersten oder zweiten Planetenstufe 20, 30, die als Plusgetriebe 22 ausgebildet ist. Als Getriebekomponenten 11 weist das Plusgetriebe 22 ein Sonnenrad 16 auf, das mit einer Mehrzahl an Planetenrädern 18 kämmt, die wiederum jeweils als radial inneres Planetenrad 45 eingesetzt sind. Das Plusgetriebe 22 ist um die Hauptdrehachse 15 des nicht näher dargestellten Koppelgetriebes 10 zentriert. Jedes der radial inneren Planetenräder 45 ist mittels eines Lagers 27 drehbar um eine Planetenradachse 26 an einem Planetenträger 14 angeordnet. Jedes radial innere Planetenrad 45 kämmt mit einem weiteren Planetenrad 18, das als radial äußeres Planetenrad 47 ausgebildet und angeordnet ist. Wie sie radial inneren Planetenräder 45 sind auch die radial äußeren Planetenräder 47 jeweils mittels eines Lagers 27 drehbar an einer Planetenradachse 26 am Planetenträger 14 angeordnet. Die radial äußeren Planetenräder 47 wiederum kämmen mit einer Hohlradverzahnung 13 an einem Hohlrad 12, das auch eine Getriebekomponente 11 des Plusgetriebes 22 ist. Die radial äußeren Planetenräder 47 liegen in Umfangsrichtung 50 betrachtet zwischen zwei Planetenträgerstegen 41. Die radial äußeren Planetenräder 47 sind gegenüber den radial inneren Planetenrädern 45 in Umfangsrichtung 50 versetzt angeordnet. Dadurch bilden die Planetenradachsen 26 eines radial inneren Planetenrads 45, des damit kämmenden radial äußeren Planetenrads 47 und die Hauptdrehachse 15 eine Dreiecksanordnung 43. Eine solche Dreiecksanordnung 43 erlaubt es, die Belastungsrichtung der Planetenradachsen 26 konstruktiv an die in einem wählbaren Betriebspunkt des Koppelgetriebes 10 zu optimieren. Ferner ermöglicht die Dreieckanordnung 43 eine Reduzierung des Außendurchmessers 42 der Planetenstufe 22.

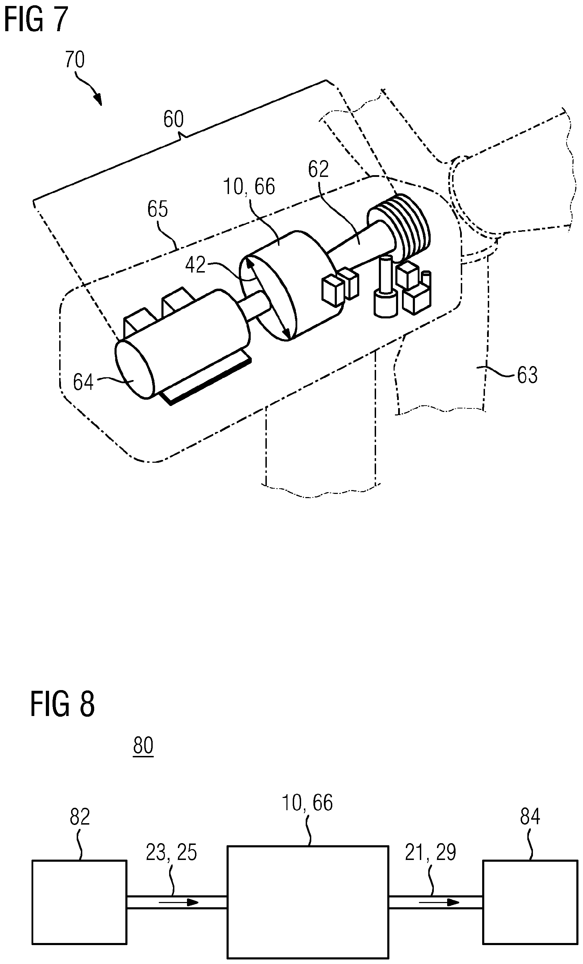

In FIG 7 ist in einer geschnittenen Schrägansicht eine Ausführungsform einer erfindungsgemäßen Windkraftanlage 70 dargestellt. Die Windkraftanlage 70 umfasst einen Rotor 63, der durch Wind in Drehung versetzbar ist. Der Rotor 63 ist über eine Rotorwelle 62 mit einem Getriebe 66 drehmomentübertragend verbunden. Das Getriebe 66 wiederum ist drehmomentübertragend mit einem Generator 64 verbunden. Die Rotorwelle 62, das Getriebe 66 und der Generator 64 gehören zu einem Antriebssatz 60 der in einer Gondel 65 der Windkraftanlage 70 aufgenommen ist. Das Getriebe 66 ist gemäß einer der oben beschriebenen Ausführungsformen ausgebildet. Durch ein entsprechend ausgebildetes Getriebe 66 wird die Effizienz der Windkraftanlage 70 gesteigert. Insbesondere bietet ein beanspruchtes Koppelgetriebe 10 einen reduzierten Durchmesser 42, was die Montage der Windkraftanlage 70 erleichtert.

Eine Ausführungsform einer beanspruchten Industrie-Applikation 80 ist in FIG 8 dargestellt. Die Industrie-Applikation 80 umfasst ein Antriebsmittel 82, das beispielsweise als Elektromotor, als Verbrennungsmotor oder als Hydraulikmotor ausgebildet ist. Das Antriebsmittel 82 ist drehmomentübertragen mit einem Getriebe 66 gekoppelt, das wiederum mit einer mechanischen Anwendung 84 verbunden ist. Das Antriebsmittel 82 ist zum Abgeben einer Antriebsleistung 25 ausgebildet, die über eine zweite Leistungswelle 23 dem Getriebe 66 zugeführt wird. Durch das Getriebe 66 wird die eingehende Antriebsleistung 25, unter Berücksichtigung von Reibungsverlusten, in puncto Drehzahl und Drehmoment gewandelt, als Ausgangsleistung 29 über eine erste Leistungswelle 21 an die mechanische Anwendung 84 weitergeleitet. Dabei ist die Drehzahl an der ersten Leistungswelle 21 niedriger als an der zweiten Leistungswelle 23. Erfindungsgemäß ist das Getriebe 66 als Koppelgetriebe 10 nach einer der oben beschriebenen Ausführungsformen ausgebildet. Die mechanische Anwendung 84 kann als eine Mühle, eine Vertikalmühle, eine Zuckermühle, eine Zementmühle, ein Gesteinsbrecher, ein Förderband, eine Pumpe, eine Hubvorrichtung, eine Müll- oder Schrottpresse ausgebildet sein.

## Patentansprüche

1. Koppelgetriebe (10), umfassend eine erste, eine zweite und eine dritte Planetenstufe (20, 30, 40), die als Getriebekomponenten (11) jeweils ein Hohlrad (12), einen Planetenträger (14) und ein Sonnenrad (16) aufweisen, **dadurch gekennzeichnet, dass** die erste oder zweite Planetenstufe (20, 30) als Plusgetriebe (22) ausgebildet ist.

2. Koppelgetriebe (10) nach Anspruch 1, **dadurch gekennzeichnet, dass** der Planetenträger (14) der zweiten Planetenstufe (30) stationär ausgebildet ist.

3. Koppelgetriebe (10) nach Anspruch 1, **dadurch gekennzeichnet, dass** das Hohlrad (12) der ersten und/oder zweiten Planetenstufe (20, 30) stationär ausgebildet ist.

4. Koppelgetriebe (10) nach einem der Ansprüche 1 bis 3, **dadurch gekennzeichnet, dass** in der als Plusgetriebe (22) ausgebildeten ersten oder zweiten Planetenstufe (20, 30) zwei miteinander kämmende Planetenräder (18, 45, 47) entlang einer Umfangsrichtung (50) zueinander versetzt angeordnet sind.

5. Koppelgetriebe (10) nach einem der Ansprüche 1 bis 4, **dadurch gekennzeichnet, dass** die Planetenträger (14) der ersten Planetenstufe (20) und der zweiten Planetenstufe (30) starr miteinander verbunden sind.

6. Koppelgetriebe (10) nach einem der Ansprüche 1 bis 5, **dadurch gekennzeichnet, dass** die Hohlräder (12) der ersten und zweiten Planetenstufe (20, 30) durchgängig ausgebildet sind.

7. Koppelgetriebe (10) nach einem der Ansprüche 1 bis 6, **dadurch gekennzeichnet, dass** das Sonnenrad (12) der ersten Planetenstufe (20, 30) mit dem Hohlrad (12) der dritten Planetenstufe (40) drehstarr verbunden ist.

8. Koppelgetriebe (10) nach einem der Ansprüche 1 bis 7, **dadurch gekennzeichnet, dass** das Sonnenrad (16) der zweiten Planetenstufe (30) mit dem Planetenträger (14) der dritten Planetenstufe (40) drehstarr verbunden ist.

9. Koppelgetriebe (10) nach einem der Ansprüche 1 bis 6, **dadurch gekennzeichnet, dass** eine erste Leistungswelle (21) des Koppelgetriebes (10) mit den Planetenträgern (14) der ersten und zweiten Planetenstufe (20, 30) drehstarr verbunden ist oder mit den Hohlrädern (12) der ersten und zweiten Planetenstufe (20, 30) drehstarr verbunden ist.

10. Koppelgetriebe (10) nach einem der Ansprüche 1 bis 9, **dadurch gekennzeichnet, dass** das Sonnenrad (16) der dritten Planetenstufe (40) mit einer zweiten Leistungswelle (23) gekoppelt ist.

11. Koppelgetriebe (10) nach einem der Ansprüche 1 bis 10, **dadurch gekennzeichnet, dass** die erste und/oder zweite Planetenstufe (20, 30, 40) betragsmäßig ein niedrigeres Standübersetzungsverhältnis aufweist als die dritte Planetenstufe (40) .

12. Koppelgetriebe (10) nach einem der Ansprüche 1 bis 11, **dadurch gekennzeichnet, dass** die zweite Planetenstufe (30) unter den drei Planetenstufen (20, 30, 40) den höchsten Außendurchmesser (42) aufweist.

13. Antriebsstrang (60) einer Windkraftanlage (70), umfassend eine Rotorwelle (62), die über ein Getriebe (66) mit einem Generator (64) drehmomentübertragend gekoppelt ist, **dadurch gekennzeichnet, dass** das Getriebe (66) als Koppelgetriebe (10) nach einem der Ansprüche 1 bis 12 ausgebildet ist.

14. Windkraftanlage (70), umfassend einen Rotor (63), der drehmomentübertragend mit einer Rotorwelle (62) verbunden ist, die in einer Gondel (65) angeordnet ist, und die Rotorwelle (62) einem Antriebsstrang (60) zugeordnet ist, **dadurch gekennzeichnet, dass** der Antriebsstrang (60) nach Anspruch 13 ausgebildet ist.

15. Industrie-Applikation (80), umfassend ein Antriebsmittel (82), das drehmomentübertragend mit einem Getriebe (66) verbunden ist, wobei das Getriebe (66) drehmomentübertragend mit einer mechanischen Anwendung (84) gekoppelt ist, **dadurch gekennzeichnet, dass** das Getriebe (66) als ein Koppelgetriebe (10) nach einem der Ansprüche 1 bis 12 ausgebildet ist.
